Europäisches Patentamt

European Patent Office

Office européen des brevets

(19)

(11) Veröffentlichungsnummer: **0 122 944**
**B1**

(12) **EUROPÄISCHE PATENTSCHRIFT**

(45) Veröffentlichungstag der Patentschrift:
12.08.87

(21) Anmeldenummer: **83103046.5**

(22) Anmeldetag: **28.03.83**

(51) Int. Cl.⁴: **C 08 J 9/10,** C 08 L 23/02 //
B29C35/02 ,(C08L23/02, 23:28,
67:06)

(54) **Verfahren zur Herstellung von Polyolefinschäumen.**

(43) Veröffentlichungstag der Anmeldung:
31.10.84 Patentblatt 84/44

(45) Bekanntmachung des Hinweises auf die Patenterteilung:
12.08.87 Patentblatt 87/33

(84) Benannte Vertragsstaaten:
AT BE CH DE FR GB IT LI NL SE

(56) Entgegenhaltungen:
EP-A-0 093 871
DE-A-1 694 130
DE-B-1 094 385
US-A-3 640 913

CHEMICAL ABSTRACTS, Band 73, Nr. 16, 19.
Oktober 1970, Seite 35, Nr. 78109u, Columbus, Ohio,
US
CHEMICAL ABSTRACTS, Band 91, Nr. 6, 6. August
1979, Seite 35, Nr. 40360c, Columbus, Ohio, US

(73) Patentinhaber: **BAYER AG, Konzernverwaltung RP**
**Patentabteilung, D-5090 Leverkusen 1 Bayerwerk**
**(DE)**

(72) Erfinder: **Molteni, Emanuele, Via F. Baracca 17,**
**I-22044 Inverigo (IT)**

## Beschreibung

Die vorliegende Erfindung betrifft ein Verfahren zur Herstellung von Polyolefinschäumen, indem man die Vernetzung und Verschäumen mit Hilfe von Mikrowellen durchführt.

Es ist bekannt, daß Polyolefinschäume nach diskontinuierlichen Methoden hergestellt werden können. Vorzugsweise werden die Schäume durch Mischung der Polyolefine mit einem Verschäumungsmittel, einem Vernetzungsmittel und geeigneten Zusatstoffen auf einem Mischwalzwerk oder in einem Extruder mit nachfolgender Formgebung, vorzugsweise zu Platten oder kontinuierlicher Bahnen, bei Temperaturen unterhalb des Zersetzungspunktes, des Vernetzungs- und Verschäumungsmittels hergestellt. Die mittlere Verweilzeit in der Mischvorrichtung ist außerdem so bemessen, daß eine Vernetzung der zu verschäumenden Mischung in diesem Stadium im wesentlichen unterbleibt.

Anschließend erfolgen in kontinuierlicher oder diskontinuierlicher Weise, und zwar entweder durch Erwärmen des Materials nur durch Heißluft oder durch Einwirkung von hochenergetischen Strahlen oder auch von beiden gleichzeitig, zuerst nur die Vernetzung mit einer Erhöhung der Schmelzviskosität des Polyolefins, und dann bei weiterer Temperaturerhöhung mit Hilfe von Heißluft unter Zersetzung des Verschäumungsmittels die Vernetzung und Verschäumung der Polymermasse.

Je nach der Menge des Verschäumungsmittels und je nach dem Vernetzungsgrad entstehen Schäume mit einer Dichte von 15 bis 300 kg/m$^3$, vorzugsweise von 20 bis 200 kg/m$^3$.

Besonders bevorzugt werden Verfahren zur Herstellung fortlaufender Schaumstoffbahnen angewendet, wie sie beispielsweise in der DE-AS 16 94 130 beschrieben sind, nach denen eine Erhitzung in einem Heißluftofen erfolgt, während die fortlaufende vernetzende und verschäumende Polyolefinbahn auf einem endlosen Transportband unterstützt wird.

Da Polyolefine schlechte Wärmeleiter sind, können nach den bekannten Verfahren nur Schäume bis zu einer relativ geringen Dicke hergestellt werden, da für den Verfahrensablauf eine rasche Erwärmung der kompletten Polyolefinbahn bei der Vernetzung und Verschäumung notwendig ist und die Zufuhr zu großer Wärmemengen zur Oberflächenverbrennung der Polyolefinbahn führen kann. Außerdem treten bei der Wärmeübertragung durch die Luft erhebliche Energieverluste auf. In der EP-A-93 871 wird die Herstellung von Polyolefinschäumen durch Erwärmen oder durch Bestrahlung beschrieben. Die erhaltenen Polyolefinschäume sind dielektrisch erwärmbar.

Man war schon bestrebt, des Aufheizen mit Heißluft zu vermeiden und das Vernetzen und Verschäumen durch dielektrisches Erwärmen, insbesondere mit Hilfe von Mikrowellen, vorzugsweise mit einer Frequenz von 300 und 3000 MHz, zu erzielen. Da Polyolefine nicht ausreichend dielektrisch erwärmbar sind, wurden bei der Herstellung von vernetzten Polyolefinschäumen mit Hilfe von Mikrowellen modifizierte Peroxide und Verschäumungsmittel eingesetzt, die durch Mikrowellen genügend angeregt, d.h. erwärmt werden können, um die gewünschte Vernetzung und Verschäumung zu bewirken. Ein solches Verfahren hat u.a. den großen Nachteil, daß es nicht mit den üblichen Additiven durchgeführt werden kann und die Bereitstellung spezifisch modifizierter Vernetzungs- und Verschäumungsmittel erfordert.

Überraschenderweise wurden nun gefunden, daß diese Schwierigkeiten vermieden werden können, indem man der zu verschäumenden und vernetzenden Polyolefinformmasse bis zu 50 Gew.-%, bezogen auf die Gesamtmischung, wenigstens einen α,β-ungesättigten Polyester hinzufügt.

Gegenstand der Erfindung sind daher Verfahren zur Herstellung von Polyolefinschäumen, indem man die Polyolefine mit üblichen bekannten Verschäumungs- und Vernetzungsmittel mischt und ohne Vernetzung und Verschäumung verformt, die dadurch gekennzeichnet sind, daß man in die Ausgangsmischung bis zu 50 Gew.-%, vorzugsweise 3-20 Gew.-%, besonders bevorzugt 5 - 10 Gew.-%, bezogen auf die gesamte Ausgangsmischung eines α,β-ungesättigten Polyesters einmischt, vorzugsweise zu einer Platte oder fortlaufenden Bahn verformt, den Formkörper gegebenenfalls mit Hilfe von Infrarotstrahlung auf eine Temperatur von höchstens 10°C unterhalb der Erreichungstemperatur des Polyolefins erhitzt und die Vernetzung und Verschäumung durch dielektrische Erwärmung, vorzugsweise mit Mikrowellen, auf Temperaturen oberhalb der Zersetzungstemperatur des Vernetzungs- und Verschäumungsmittels vornimmt.

Vorzugsweise werden die erfindungsgemäßen Schäume so hergestellt, daß das Vermischen der Polyolefine mit den üblichen Verschäumungsmitteln, Vernetzungsmitteln, gegebenenfalls üblichen Zusatzstoffen sowie den erfindungsgemäß verwendeten Polyestern auf einem Mischwalzwerk oder auf einem Extruder unter nachfolgender Herstellung der Formkörper, z. B. Platten oder kontinuierlicher Bahnen, bei Temperaturen unterhalb des Zersetzungspunktes des Vernetzungs- und Verschäumungsmittels erfolgt. Die mittlere Verweilzeit in der Mischvorrichtung ist so bemessen, daß eine Vernetzung der zu verschäumenden Mischung in diesem Stadium im wesentlichen unterbleibt. Die Formkörper können zwischengelagert werden oder noch im heißen Zustand der eigentlichen Vernetzung und Verschäumung zugeführt werden. Werden die Formkörper zwischengelagert, so empfiehlt es sich, vor der eigentlichen Vernetzung und Verschäumung diese mit IR-Strahlen aufzuwärmen.

Anschließend wird die Platte oder fortlaufende Bahn mit Hilfe von Mikrowellen, die von einem handelsüblichen UHF-Wellen-Generator erzeugt werden, auf Temperaturen oberhalb des Zersetzungspunktes des Vernetzungsmittels, vorzugsweise auch oberhalb des Zersetzungspunktes des Verschäumungsmittels erhitzt. Dieses Erhitzen erfolgt bevorzugt in einer isolierten Kammer unter Unterstützung des zu verschäumenden Formkörpers mit Hilfe eines Endlosbandes, vorzugsweise einem durchlöcherten Band. Als diese Kammer wird besonders bevorzugt ein Heißluftofen verwendet, um die Vernetzungs- und Verschäumungstemperatur noch genauer und vor allem mit größter Gleichmäßigkeit über den gesamten zu verschäumenden Formkörper regeln zu können, indem man die Mikrowellenwirkung mit der Heißluftwirkung koppelt.

Das erfindungsgemäße Verfahren wird bevorzugt so durchgeführt wie es in Fig. 7 schematisch dargestellt ist. Darin bedeutet (1) den Extruder, in dem die Ausgangsmischung gemischt und zu einer fortlaufenden Bahn (A) extrudiert wird; anschließend wird die Polyolefinbahn mit Kalanderwalzen (2) geglättet und mit IR-Strahlen (3) vorgewärmt. Im Ofen (5) wird die Bahn auf ein Endlosband (4) gefördert und unterstützt und durch Mikrowellen, die im Generator (6) erzeugt werden und durch Heißluft die durch Methanbrenner (7) auf Temperatur gehalten wird, vernetzt und verschäumt. Der Ofen ist mit Rückstromventilatoren (8) und Lufttemperaturreglern (9) ausgerüstet. Die vernetzte Polyolefinschaumbahn (A') wird mit Kühlwalzen (11) gekühlt, wobei mit dem Ventilator der Entlüftungshaube (10) Abgase entfernt werden. Nachdem die Schaumbahn mit den Kalanderwalzen (12) geglättet worden ist, wird sie auf der Wickelvorrichtung (13) aufgewickelt.

Als Polyolefine im Sinne der Erfindung können Polyethylen oder Polypropylen gegebenenfalls auch deren Gemische eingesetzt werden, vorzugsweise Polyethylen und Niederdruck-Polyethylen der Dichte 0,94 bis 0.97 g/cm³ und/oder Hochdruckpolyethylen der Dichte 0,91 bis etwa 0,94 g/cm³, vorzugsweise Hochdruckpolyethylen. Unter der Bezeichnung Polyolefine werden aber auch Polyolefincopolymere verstanden, vorzugsweise solche, zu deren Herstellung Monomerengemische mit überwiegendem Anteil an Polyolefinen verwendet werden.

Solche Copolymere sind z. B. Ethylen-Propylen-Copolymere, Ethylen-Butylen-Copolymere, Copolymerisate aus Ethylen und Acrylsäureestern oder deren Derivaten, Copolymere aus Ethylen und Methacrylsäure oder deren Derivaten. Auch Mischungen der obengenannten Polyolefine mit Kautschuken und/oder Kunststoffen können gemäß der Erfindung zu Schaumstoffen verarbeitet werden. Darunter werden z. B.

Mischungen verstanden, die zu 50 Gew.-% und mehr als Polyolefinen bestehen. Mit Polyolefinen mischbare Kautschuke sind z. B. Naturkautschuk, Ethylen-Propylen-Kautschuk, Butylkautschuk, Polyisobutylen, ABS-Kautschuk, Polybutadien, Polybuten und Polyisopren. Mit Polyolefinen mischbare Kunststoffe sind z. B. Polystyrol, chloriertes Polyethylen oder sulfochloriertes Polyethylen.

Als Vernetzungsmittel werden in den erfindungsgemäßen Verfahren vorzugsweise bekannte, übliche organische Peroxide verwendet, die bereits zu Vernetzung von Polyolefinschäumen durch konventionelle Erwärmung, d.h. ohne dielektrische Erwärmung eingesetzt worden sind. Besonders bevorzugt sind dies Dicumylperoxid, 2,5-di-(tert.-butyl-peroxy)-hexan, tert.-Butylhydroperoxid, Cumyl-tert.butylperoxid, Di-tert.-butylperoxid, vorzugsweise wird Dicumylperoxid verwendet. Die Peroxide werden in Mengen von 0,3 bis 1,5 Gew.-% eingesetzt, bezogen auf die Ausgangsmischung.

Als Schäummittel werden die bekannten in der Hitze gasabspaltenden Mittel verwendet, deren Zersetzungstemperatur gleich oder höher liegt als diejenige des verwendeten organischen Peroxid.

Die üblichen, für die Polyolefinschaumerzeugung verwendenden Verschäumungsmittel, die nicht modifiziert wurden, um dielektrisch erwärmbar zu sein, sind vorzugsweise Azodicarbonamid und/oder p,p'-Oxi-bis-benzolsulfonyl-hydrazid und/oder Dinitrosopentamethylentetramin.

Bevorzugtes Schäummittel ist Azodicarbonamid mit einem Zersetzungspunkt bzw. Zersetzungsbereich ab 190°C. Die angewendete Menge an Schäummittel richtet sich nach der angestrebten Dichte des herzustellenden Schaumstoffs und liegt im allgemeinen zwischen 0,5 bis 25 Gew.-%, vorzugsweise bei 1 bis 20 Gew.-%, bezogen auf die Gesamtmischung.

Als Modifikatoren, die die Erwärmung mit Mikrowellen ermöglichen, kommen α,β-ungesättigte Polyester in Frage.

Bevorzugte α,β-ungesättigte Polyester sind die bekannten Polykondensationsprodukte aus mindestens einer α,β-einfach ungesättigten Dicarbonsäure mit 4 - 8 C-Atomen oder deren Derivate wie z. B. Anhydriden, gegebenenfalls in Abmischung mit bis zu 200 Mol-%, bezogen auf die ungesättigten Dicarbonsäure, wenigstens einer gesättigten aliphatischen oder cycloaliphatischen oder aromatischen Dicarbonsäure mit 8 - 10 C-Atomen oder deren Derivate mit mindestens einer aliphatischen, cycloaliphatischen oder aromatischen Polyhydroxyverbindung, insbesondere Dihydroxyverbindung mit 2 - 8 C-Atomen, vorzugsweise sind es Polyester, wie sie bei J. Björksten et al., "Polyesters and their Applications", Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die gegebenenfalls mitzuverwendenden aromatischen, gesättigten, aliphatischen oder cycloaliphatischen Dicarbonsauren oder ihren Derivaten sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäurenhydrid und Bernsteinsäureester und -chloride, Adipinsäure, Sebacinsäure. Um schwerentflammbare Harze herzustellen, können auch halogenierte Dicarbonsäuren wie z. B. Hexachlorendomethylentetrahydrophthalsäure, Tetrachlorphthalsäure oder Tetrabromphthalsäure mitverwendet werden. Als zweiwertige Alkohole können vorzugsweise aliphatische Alkohole mit $C_2$-$C_{20}$, Ethylenglykol, Propandiol-1,2, Propandiol-1,3, Diethylenlykol, Dipropylenglykol, Butandiol-1,3, Butandiol-1,4, Neopentylglykol, Hexandiol-1,6, 2,2-Bis-(4-hydroxycyclohexyl)-propan, Perhydrobisphenol als Phenol, vorzugsweise Bisoxalkyliertes Bisphenol A, und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1-6 C-Atomen, wie Methanol, Ethanol, Butanol, Allylalkohol, Cyclohexanol und Tetrahydrofurfurylalkohol, Trimethylpropanol, Glycerin und Pentaerythrit und von Benzylalkohol von Mono-, Di- und Triallylethern und Benzylethern drei- und mehrwertiger Alkohole mit 3 - 6 C-Atomen gemäß der DE-AS 1 024 654, z. B. Trimethylolpropandiallylether, sowie durch Einbau von Monocarbonsäuren wie Benzoesäure oder Acrylsäure.

Die Säurezahlen der Polyester liegen vorzugsweise zwischen 10 und 100, vorzugsweise zwischen 20 und 70, die OH-Zahlen zwischen 10 und 150, vorzugsweise zwischen 20 und 100, und die als Zahlenmittel bestimmten Molekulargewichte $\bar{M}_n$ zwischen ca. 500 und 5000, vorzugsweise zwischen ca. 1000 und 3000 (dampfdruckosmometrisch gemessen in Dioxan und Aceton).

Als mit den ungesättigten Polyestern copolymerisierbare ungesättigte Monomere eignen sich in der Polyestertechnologie gebräuchliche ungesättigte Verbindungen, die bevorzugt α-substituierte Vinyl- oder Vinylidengruppen oder β-substituierte Allylgruppen tragen, bevorzugt Styrol; aber auch beispielsweise kernchlorierte und -alkylierte bzw. alkenylierte Styrole, wobei die Alkylgruppen 1-4 Kohlenstoffatome enthalten können, z. B. Vinyltoluol, Divinylbenzol, α-Methylstyrol, tert.-Butylstyrol, Chlorstyrole; Vinylester von Carbonsäuren mit 2-6 Kohlenstoffatomen, bevorzugt Vinylacetat, Vinylpropionat, Vinylbenzoat, Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Überraschenderweise ermöglicht der Zusatz der ungesättigten Polyester bei der Herstellung chemisch vernetzter Polyolefinschäume, daß die Menge zu Peroxid erheblich reduziert werden kann.

Außer den wirtschaftlichen Vorteilen führt diese Reduzierung dazu, daß die teilweise übelriechenden Zersetzungsprodukte des vorzugsweise verwendeten Dicumylperoxids, wie Azetophenon, in weit geringeren Mengen anfallen.

Auch die üblichen Zusatzstoffe, die gewöhnlich zusammen mit Kunststoffen auf Polyolefinbasis verwendet werden, wie z. B. Lichtschutzmittel, Pigmente, Füllstoffe, flammhemmende Mittel, antistatische Mittel, Gleitmittel können dem zu vernetzenden und zu verschäumenden Gemisch vor der Verarbeitung zu einem Formkörper zugesetzt werden.

Die dielektrischen Erwärmung vorzugsweise mit Mikrowellen mit einer Frequenz von 300 - 3000 MHz, vorzugsweise von 2000 - 3000 MHz, besonders bevorzugt 2450 MHz kann mit einem handelsüblichen Generator durchgeführt werden.

Die erfindungsgemäß hergestellten Polyolefinschäume sind außerdem dielektrisch erwärmbar und erlauben so eine vorteilhafte Weiterverarbeitung nach den an sich bekannten Verfahren unter Ausnutzung des dielektrischen Erwärmes, z. B. Hochfrequenzschweißen, -Verformen, -Stanzen bei Frequenzen von etwa 27 MHz. Dadurch können insbesondere temperaturempfindliche Materialien, wie textile Gewebe, mit dem Polyolefinschaum auf einfache Weise verschweißt werden.

**Beispiel**

Auf einem Extruder wird eine Mischung der folgenden Produkte in den angegebenen Gewichtteilen zu einer Platte extrudiert:

| | | |
|---|---|---|
| Hochdruckpolyethylen | 50 | Gew.-Teile |
| chloriertes Polyethylen | 30 | Gew.-Teile |

| ungesättigter Polyester | 5 | Gew.-Teile |
|---|---|---|
| Azodicarbonamid | 14,7 | Gew.-Teile |
| Dicumylperoxid | 0,3 | Gew.-Teile |

Der handelsübliche, ungesättigte Polyester wurde durch Polykondensation von Maleinsäureanhydrid, Ethylen, Propylenglykol, Ethylenglykol und Benzylalkohol hergestellt.

Die Extrusionstemperatur liegt bei etwa 130° C, so daß weder Verschäumung noch Vernetzung eintritt.

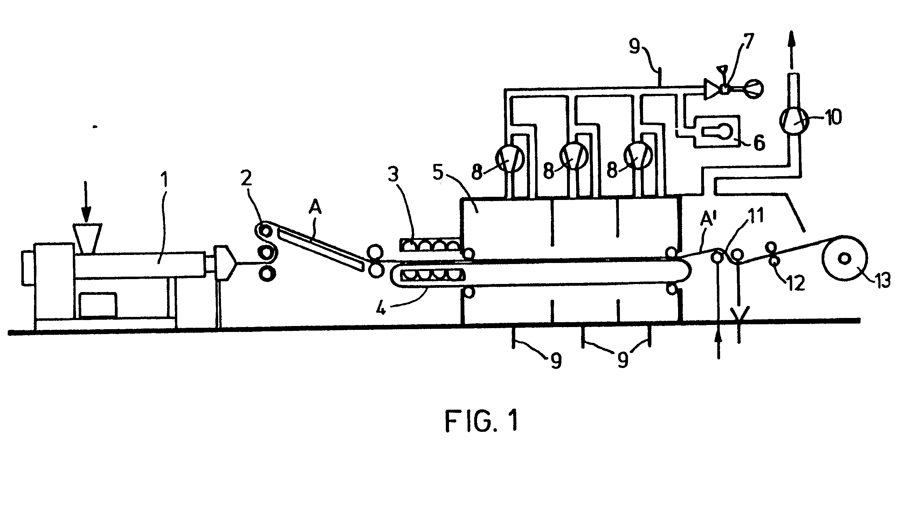

Die so erhaltene Platte wird in einem Heißluftofen, wie es in Fig. 1 beschrieben, mit Hilfe von Mikrowellen mit einer Frequenz von 2450 MHz auf eine Temperatur von etwa 210° C erwärmt, wodurch eine gleichmäßige Vernetzung und Verschäumung der Polyolefinbahn erreicht wird. Die Luft im Ofen wird auf etwa 200° C gehalten.

Die Schaumbahn wird durch Frischluft und Kontakt mit gekühlten Walzen abgekühlt. Der Schaum zeigt eine glatte Oberfläche und hat ein Raumgewicht von 35 kg/m³.

## Patentansprüche

1. Verfahren zur Herstellung von Polyolefinschäumen, bei dem man die Polyolefine mit üblichen für die Polyolefinschaumerzeugung bekannten Verschäumungs- und Vernetzungsmitteln mischt und weitgehend ohne Vernetzung und Verschäumung vorzugsweise zu einer Platte oder einer fortlaufenden Bahn verformt, dadurch gekennzeichnet, daß man in die Ausgangsmischung bis zu 50 Gew.-% eines α,β-ungesättigten Polyesters einmischt, die Mischung formt, gegebenenfalls durch IR-Strahlung aufwärmt, und durch dielektrisches Erhitzen auf Temperaturen oberhalb der Zersetzungstemperatur des Vernetzungs- und Verschäumungsmittels vernetzt und verschäumt.

2. Verfahren nach Anspruch 1, dadurch gekennzeichnet, daß das dielektrische Erhitzen mit Mikrowellen vorgenommen wird.

3. Verfahren nach Anspruch 1 oder 2, dadurch gekennzeichnet, daß die Mikrowellen eine Frequenz von 300-3000 MHz haben.

4. Verfahren nach Ansprüchen 1-3, dadurch gekennzeichnet, daß das dielektrische Erhitzen in einem Heißluftofen vorgenommen wird.

5. Verfahren nach Ansprüchen 1-4, dadurch gekennzeichnet, daß neben dem dielektrischen Erhitzen noch Heißluft zur Wärmezufuhr verwendet wird.

6. Verfahren nach Ansprüchen 1-5, dadurch gekennzeichnet, daß 3-20 Gew.-%, bezogen auf die Ausgangsmischung, eines ungesättigten Polyesters zugemischt wird.

7. Verfahren nach Ansprüchen 1-6, dadurch gekennzeichnet, daß ein Polyester mit einer Säurezahl zwischen 10 und 100 und einer OH-Zahl zwischen 10 und 150 verwendet wird.

8. Verfahren nach Anspruch 7, dadurch gekennzeichnet, daß ein Polyester mit einer Säurezahl zwischen 20 und 70 und einer OH-Zahl zwischen 20 und 100 verwendet wird.

## Claims

1. Process for the production of polyolefin foams in which the polyolefins are mixed with customary foaming and cross-linking agents known for polyolefin foam production and the mixture is preferably shaped into a plate or into a continuous sheet, substantially without cross-linking and foaming, characterised in that up to 50 % by weight of an α,β-unsaturated polyester is mixed into the starting mixture, the mixture is shaped, heated optionally by IR radiation, and cross-linked and foamed by heating is dielectrically to tempertures above the decomposition temperature of the cross-linking and foaming agent.

2. Process according to Claim 1, characterised in that the dielectric heating is carried out using microwaves.

3. Process according to Claim 1 or 2, characterised in that the microwaves have a frequency of 300-3000 MHz.

4. Process according to Claims 1-3, characterised in that the dielectric heating is carried out in a hot-air oven.

5. Process according to Claims 1-4, characterised in that in addition to dielectric heating hot air is used for the supply of heat.

6. Process according to Claims 1-5, characterised in that 3-20 % by weigth, based on the starting mixture, of an unsaturated polyester is added.

7. Process according to Claim 1-6, characterised in that a polyester with an acid number of between 10 and 100 and an OH number of between 10 and 150 is used.

8. Process according to Claim 7, characterised in that a polyester with an acid number of between 20 and 70 and an OH number of between 20 and 100 is used.

## Revendications

1. Procédé de production de mousses de polyoléfines, dans lequel on mélange les polyoléfines avec des agents moussants et des agents réticulants connus pour la production de mousses de polyoléfines et on les transforme largement sans réticulation ni moussage de préférence en une plaque ou en une bande continue, caractérisé en ce qu'on incorpore dans le mélange de départ jusqu'à 50 % en poids d'un polyester à non-saturation α,β, on façonne le mélange, on le chauffe, le cas échéant, sous l'action des rayons infrarouges et on produit sa réticulation et son moussage par chauffage diélectrique à des températures au-dessus de la

**0 122 944**

température de décomposition de l'agent réticulant et de l'agent moussant.

2. Procédé suivant la revendication 1, caractérisé en ce que le chauffage diélectrique est effectué par micro-ondes.

3. Procédé suivant la revendication 1 ou 2, caractérisé en ce que les micro-ondes ont une fréquence de 300 à 3000 MHz.

4. Procédé suivant les revendications 1-3, caractérisé en ce que le chauffage diélectrique est effectué dans un four à air chaud.

5. Procédé suivant les revendications 1-4, caractérisé en ce qu'on utilise de l'air chaud en plus du chauffage diélectrique pour l'apport de chaleur.

6. Procédé suivant les revendications 1 à 5, caractérisé en ce qu'on ajoute 3 à 20 % en poids, par rapport au mélange de départ, d'un polyester non saturé.

7. Procédé suivant les revendications 1 à 6, caractérisé en ce qu'on utilise un polyester d'indice d'acide compris entre 10 et 100 et d'indice d'hydroxyle compris entre 10 et 150.

8. Procédé suivant la revendication 7, caractérisé en ce qu'on utilise un polyester d'indice d'acide compris entre 20 et 70 et d'indice d'hydroxyle compris entre 20 et 100.

FIG. 1

0 122 944